# EUROPEAN PATENT SPECIFICATION

(11) **EP 3 069 923 B1**
(45) Date of publication and mention of the grant of the patent: **28.02.2018**
(21) Application number: 16161037.3
(22) Date of filing: 18.03.2016
(51) Int. Cl.: B60L 11/18, B60L 1/02

(54) **ESTIMATION METHOD OF A RESIDUAL ELECTRIC VEHICLE RANGE**
SCHÄTZVERFAHREN FÜR DIE VERBLEIBENDE REICHWEITE EINES ELEKTROFAHRZEUGS
PROCÉDÉ D'ESTIMATION D'UNE PLAGE DE VÉHICULE ÉLECTRIQUE RÉSIDUELLE

(30) Priority: 18.03.2015 IT TO20150174
(43) Date of publication of application: 21.09.2016
(73) Proprietor: IVECO S.p.A., 10156 Torino (IT)
(72) Inventor: PERRONE, Attilio, 16010 SERRA RICCO' (IT); AIMO BOOT, Marco, 10072 CASELLE TORINESE (IT)
(74) Representative: Franzolin, Luigi

(56) References cited:
- DE-A1-102011 118 237

## Description

### Field of the invention

The present invention relates to the field of the estimation systems of a residual electric vehicle range. DE102011118237 discloses the features of the preamble of the herewith appended claim 1.

### Prior art

The estimation of the residual range is often carried out by analysing the evolution of the residual energy of the vehicle batteries. A characteristic parameter of the residual energy is called "state of charge" of the battery (SOC) and expresses in percentage this residual charge. By multiplying this parameter by the nominal capacity of the batteries, it is possible to know their residual charge. This parameter is provided by suitable monitoring devices of the vehicle battery voltage. Unfortunately, these devices have a very limited sensitivity, and moreover, the variation of the voltage of the batteries is not linear. Therefore, the known methods of estimation of the residual range are often unreliable, overestimating the residual range and then informing, when it is too late, that the charge level is critical.

In order to improve the estimation of the residual range, the battery suppliers provide a table-organised parameter K that allows the correction of the residual energy value calculated by using the SOC depending on the residual battery discharge time.

This parameter is generally table-organised on an hourly basis, namely based on a complete discharge of the battery in a time span of one hour, two hours, etc.

The known technique calculates the residual battery discharge time by comparing the residual energy values calculated by means of said SOC parameter over the time. Based on this residual discharge time, the residual battery energy is corrected through the above parameter K.

Since the SOC estimation is unreliable, also the calculation of the residual range is unreliable.

### Summary of the invention

The object of the present invention is to provide an estimation method of a residual electric vehicle range that is considerably more reliable than the known methods.

The basic idea of the present invention is to calculate a kilometric consumption value of a vehicle kWh/km, for example by means of tests; to store this value and to calculate a residual range as the residual energy divided by said kilometric consumption. At the same time, a vehicle speed is acquired/calculated and a residual battery discharge time is calculated as the ratio given by said residual range divided by said speed.

A corrective coefficient to be applied to said residual energy in the next step is detected through the residual battery discharge time.

Therefore, this is a recursive method consisting of steps performed in cyclic succession.

Unlike the prior art, the residual discharge time is calculated based on the average speed and based on a predetermined kilometric consumption value.

The corrective coefficient K of the residual energy is then detected by means of the aforesaid residual discharge time value that allows a correction of the estimated residual energy of the vehicle battery in a known manner. Preferably, rather than implementing instant speed and residual energy values, samples are taken and their average values are calculated.

The estimation of the average speed is by far more precise than the estimation of the SOC variation in a same time range. Accordingly, the present method is vastly more precise and sensitive than those of the prior art, because it allows a better calculation of the residual battery discharge time and thus a more realistic estimation of the residual range.

Preferably, the above calculations are performed by sampling the vehicle speed and the residual energy of the vehicle battery, not in terms of time, but in terms of travelled distance. Therefore, the sampling can be performed e.g. every 100 m or every 1000 m, etc. Preferably, said kilometric consumption value is calculated by neglecting the energy consumed by any other service on board, including the heating of the vehicle cabin. Therefore, the residual discharge time is substantially calculated only based on the "traction" consumption, while the consumption of on-board services is less precisely taken into account by acquiring the classic SOC parameter. The object of the present invention is an estimation method of a residual electric vehicle range.

Another object of the present invention is an estimation device implementing the above method.

Another object of the present invention is an electric vehicle comprising the aforementioned estimation system. The claims describe preferred variants of the invention, thus forming an integral part of the present description.

### Brief description of the figures

Further objects and advantages of the present invention will become clear from the following detailed description of an embodiment thereof (and of its variants) and from the attached figures, provided for merely illustrative and not limitative purposes, in which:
Figure 1 shows a block diagram of a preferred variant of the method object of the present invention;
Figure 2 shows in detail a block of Figure 1;
Figure 3 shows a vehicle data network managed by a VMU processing unit designed to implement the method of the present invention.

The same reference numbers and letters in the figures identify the same elements or components.

In the present description, the term "second" component does not imply the presence of a "first" component. These terms are in fact only used for clarity's sake and are not intended as limiting.

### Detailed description of embodiments

It is now described the method of the invention, which allows the estimation of a residual vehicle range by using a suitable sampling of the speed of the vehicle and of the residual energy.

The method object of the present invention comprises in cyclic succession:
- acquisition of a residual energy contained in the vehicle batteries,
- calculation of a residual range A_R as the ratio given by the residual energy E divided by a predetermined kilometric consumption coefficient DK and calculation of a residual discharge time R of the vehicle batteries as the ratio given by said residual range A_R divided by a vehicle speed S,
- identification of a corrective parameter K of said residual energy value E, function of said residual discharge time R,
- acquisition of said residual energy E and correction thereof by means of said corrective parameter K.

According to a preferred variant of the invention, the above calculations are made on average speed values S_E and average residual energy values E_E stored in the batteries. According to a preferred variant of the invention, the sampling is performed on the travelled distance, namely every N meters travelled by the vehicle, for example every 100 m or 200 m or 500 m, etc.

An instantaneous vehicle speed S and a residual energy E of the vehicle batteries is acquired at each sampling step.

Said residual energy can be obtained, for example, by means of the aforementioned SOC parameter supplied by suitable monitoring means, namely sensors, of the battery state of charge. Said parameter is per sé known.

An average vehicle speed S_E and a residual average energy E_E of the vehicle batteries is calculated every Z samples, for example every 2 or 3 or 10 samples.

The residual energy value E_E is divided by a kilometric consumption coefficient DK, thus obtaining a residual range value A_R, therefore A_R = E_E/DK.

By dividing said residual range A_R by said average speed S_E it is obtained a discharge rate R of the vehicle batteries. Therefore, R = A_R/S_E which represents a complete battery discharge time.

The most appropriate K value is found through said rate R:

| R | K |
|---|---|
| 1h (hour) | 0.78 |
| 2h | 0.89 |
| 3h | 0.92 |
| 4h | 0.94 |
| 5h | 0.95 |
| 8h | 0.97 |

Possibly, even through linear interpolation.

Therefore, after the Z successive samples, the residual energy is calculated by multiplying it by K.

In order to avoid overly optimistic estimations at the beginning of the execution of this method, it is preferable that the initial residual battery charge is multiplied by a mean value of K which preferably coincides with the one anticipating the complete discharge in 4 hours, K(4).

It is clear that the present method can be reinitialized after recharging the vehicle battery and/or after switching off the vehicle.

According to a preferred variant of the present invention, the number of recharges is stored to estimate also the decay of the ability of the vehicle batteries to store energy through an aging coefficient KA that reduces by about 1% the nominal capacity of the batteries every 100 recharging operations.

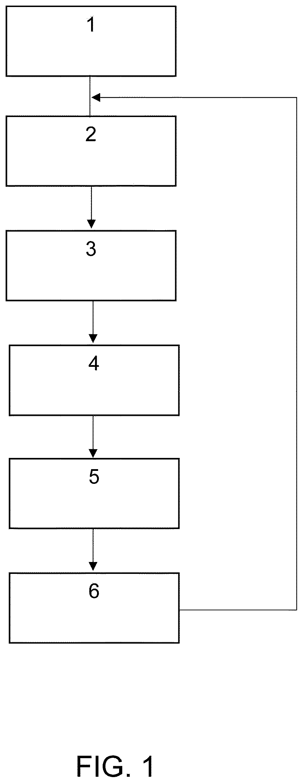

With reference to Figure 1, a preferred variant of the present method comprises the following steps:
- Step 1: initialization of the method: K = K(4) and the kilometric consumption coefficient DK is acquired;
- Step 2: calculation of the residual energy: E = (SOC * (E_N - KA) * K), where E_N is the nominal capacity of the vehicle batteries,
- Step 3: sampling of Ei = (SOCi * (E_N-KA) * K) and Si, where i = 0 - Z and each sample is sampled every N travelled meters of the vehicle,
- Step 4: E_E and S_E calculation on said Z samples,
- Step 5: residual range calculation A_E = E_E/DK and residual discharge time calculation R = A_R/S_E,
- Step 6: K detection and back to Step 2.

It is clear that after the first cycle where K = K(4), the most appropriate K is selected.

Since the kilometric consumption coefficient DK is predetermined, it is conveniently associated to a preliminary step: Step 0.

Said kilometric consumption coefficient DK expressed in kWh per kilometre (or equivalently in VAh/km) is obtained experimentally based on experimental tests on a specific vehicle and stored in a suitable non-volatile memory of a processing unit responsible for calculating the residual range.

Preferably, said DK coefficient is an average of different loading conditions of the vehicle. Luckily, it has been found that the variations in the load, intended as weight, very little affect the DK coefficient.

Preferably, these tests are performed keeping off the other on-board loads/services.

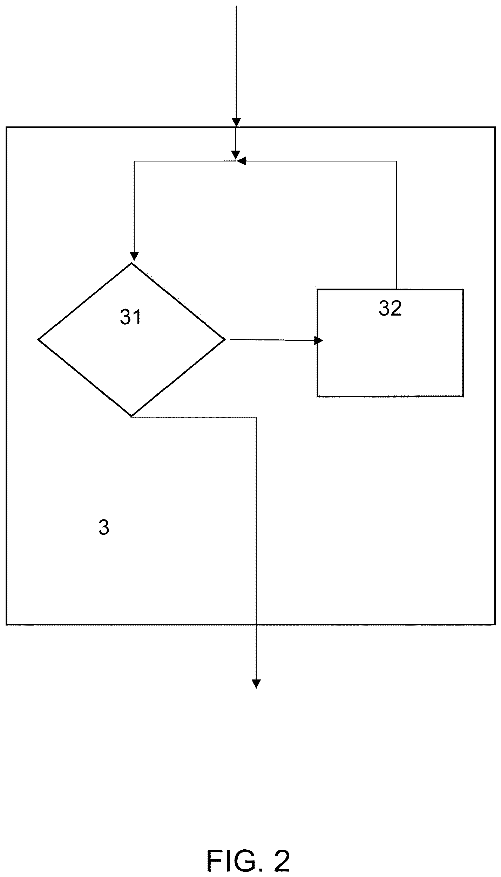

Figure 2 shows in detail the block 3 of Figure 1 corresponding to the abovementioned step 3.

At block 31 a check is made on the sampled number of samples and on the travelled distance, in other words, if the travelled distance is greater than N go to step 32 to perform the sampling of Ei and Si. This is repeated as long as the index "i" is not equal to Z, then the check ends and the 2 *Z samples are passed to block 4.

According to a preferred variant of the present invention, the residual energy calculation includes in step 2 an additional threshold coefficient SOCG which further reduces the estimation of the residual battery charge to ensure a sufficient threshold level, which is preferably set between 0.15 and 0.2.

Obviously, in the above equations the SOC is used in the form 1 - 0 and not in percentage.

The processing unit responsible of the above calculation of the residual range is preferably the VMU, namely the vehicle control unit.

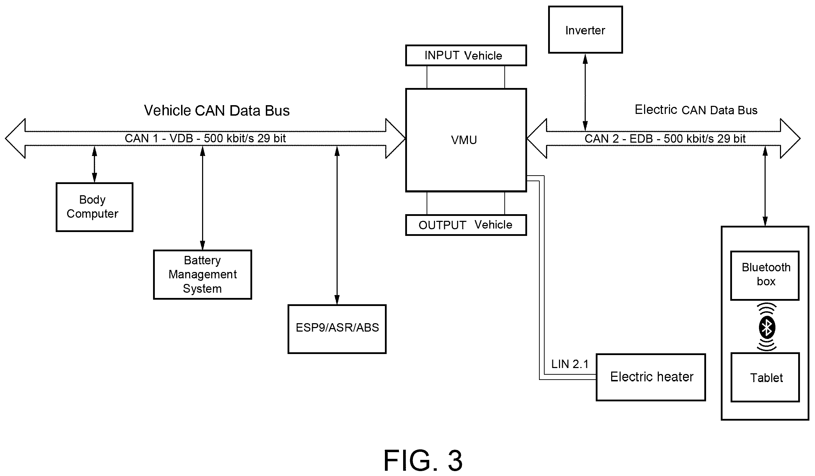

Figure 3 shows an example of vehicle data network in which a VMU interconnects two CAN networks, CAN1 and CAN2. The first is dedicated to the management of on-board systems such as ESP, ABS, on-board computer and battery monitoring system, while the network 2 connects user devices and the traction inverter, which feeds at least one electric traction motor.

The present invention can be advantageously carried out by a computer program that comprises coding means for implementing one or more steps of the method, when this program is run on a computer. Therefore, it is intended that the scope of protection extends to said computer program and, furthermore, to computer-readable media that comprise a recorded message, said computer-readable media comprising program-coding means for implementing one or more of the steps of the method, when said program is run on a computer.

Variants of the described limitative example are possible without departing from the scope of the present invention, comprising all the equivalent embodiments for a person skilled in the art.

From the above description, the person skilled in the art is able to manufacture the object of the invention without introducing any further construction details. The elements and features shown in the various preferred embodiments, including the drawings, can be combined without leaving the scope of protection of the present application. What described in the part relating to the state of the art is only necessary for a better understanding of the invention and does not assert the existence of what described. Furthermore, unless specifically excluded in the detailed description, what described in the state of the arte can be considered in combination with the characteristics of the present invention, thus forming an integral part of the present invention. None of the characteristics of the different variants is essential; therefore, the single characteristics of each preferred variant or drawing can be separately combined with the other described variants.

## Claims

1. An estimation method of a residual range of an electric vehicle having a battery pack and at least one electric motor cooperating with a vehicle transmission, the method comprising the step of
- (Step 2') acquisition of residual energy E = SOC * E_N, where E_N is the nominal capacity of the vehicle batteries and SOC is a state of charge coefficient. The method being **characterized by** the
cyclic execution of the followings steps:
- (Step 5) calculation of a residual range (A_R) of the electric vehicle as the ratio given by the residual energy (E) divided by a predetermined kilometric consumption coefficient (DK) and calculation of a residual discharge time (R) of the vehicle batteries as the ratio given by said residual range (A_R) divided by a speed (S) of the electric vehicle, wherein said calculation of said residual range (A_R) and of said residual discharge time (R) of the vehicle batteries is performed on average values of residual energy (E_E) and vehicle speed (S_E) of a predetermined number of samples (Z)
- (Step 6) identification of a predetermined corrective parameter (K) for said value of residual energy (E), depending on the residual discharge time (R) by means of a predetermined function of said residual discharge time (R),
- (Step 2) acquisition of said residual energy (E) and correction thereof by means of said corrective parameter (K), wherein said correction of the residual energy (E) is obtained by the following equation E = SOC * E_N * K, where E_N is the nominal capacity of the vehicle batteries, SOC is the state of charge coefficient and K is said predetermined correction parameter.

2. A method according to claim 1 , wherein said kilometric consumption coefficient expresses an energy consumption per kilometre calculated and averaged over tests under different load conditions of the vehicle.

3. A method according to claim 2, wherein said tests contemplate the deactivation of any further on-board loads (CAN 2) .

4. A method according to claim 1, wherein a sampling step is defined by a predetermined distance (N) travelled by the vehicle.

5. A method according to any of the preceding claims, wherein said acquisition and correction (Step 2) of said residual energy (E) comprises a step of further correcting said residual energy value on the basis of an aging coefficient (KA) of the storage capacity of the vehicle batteries based on a number of recharge cycles thereof.

6. A method according to claim 4, wherein said residual energy is equal to E = (SOC*(E_N - KA) * K), where E_N is the nominal capacity of the vehicle batteries, SOC is a state-of-charge coefficient, KA is the aforesaid aging coefficient and K is the aforesaid corrective parameter, function of the residual discharge time (R) of the batteries of the electric vehicle.

7. A computer program that comprises program-coding means designed to implement all of the steps of any one of claims 1 to 6, when said program is run on a computer.

8. Computer readable means comprising a recorded program, said computer readable means comprising program-coding means designed to implement all of the steps of any one of claims 1 to 6, when said program is run on a computer.

9. A device (VMU) for estimating a residual electric vehicle range, the vehicle having a battery pack and at least one electric motor cooperating with a vehicle transmission, the device comprising
- means for acquiring a state of charge (SOC) of said vehicle battery pack,
- means for acquiring a vehicle speed,
And **characterized in** comprising
- processing means designed for executing all the steps of claim 1.

10. An electric vehicle comprising a battery pack and at least one electric motor cooperating with a vehicle transmission, and a device (VMU) for estimating a residual electric vehicle range according to claim 9.

## Patentansprüche

1. Schätzverfahren für eine Restreichweite eines Elektrofahrzeugs mit einem Batteriepack und zumindest einem Elektromotor, der mit einem Fahrzeuggetriebe zusammenwirkt, welches Verfahren umfasst:
- den Schritt (Schritt 2') der Ermittlung einer Restenergie E = SOC * E_N, wobei E_N die Nominalkapazität der Fahrzeugbatterien ist und SOC ein Ladungszustandskoeffizient,
welches Verfahren **gekennzeichnet ist durch** die zyklische Ausführung der folgenden Schritte:
- (Schritt 5) Berechnung einer Restreichweite (A_R) des Elektrofahrzeugs als das Verhältnis, vorgegeben durch die Restenergie (E) geteilt durch einen vorgegebenen kilometrischen Verbrauchskoeffizienten (DK), und Berechnung einer Restentladungszeit (R) der Fahrzeugbatterien als das Verhältnis gegeben durch die Restreichweite (A_R) geteilt durch eine Geschwindigkeit (S) des Elektrofahrzeugs, wobei die Berechnung der Restreichweite (A_R) und der Restentladungszeit (R) der Fahrzeugbatterien durchgeführt wird anhand von Durchschnittswerten der Restenergie (E_E) und der Fahrzeuggeschwindigkeit (S_E) aufgrund einer vorbestimmten Anzahl von Stichproben (Z),
- (Schritt 6) Identifizierung eines vorbestimmten Korrekturparameters (K) für den Wert der Restenergie (E), in Abhängigkeit von der Restentladungszeit (R) mittels einer vorbestimmten Funktion der Restentladungszeit (R),
- (Schritt 2) Ermittlung der Restenergie (E) und Korrektur derselben mittels des Korrekturparameters (K), wobei die Korrektur der Restenergie (E) erhalten wird durch die folgende Gleichung E = SOC * E_N * K, wobei E_N die Nominalkapazität der Fahrzeugbatterien ist, SOC der Ladungszustandskoeffizient ist und K der vorbestimmte Korrekturparameter ist.

2. Verfahren gemäß Anspruch 1, bei welchem der kilometrische Verbrauchs-Koeffizient einen Energieverbrauch pro Kilometer ausdrückt, berechnet und gemittelt über Versuche unter unterschiedlichen Lastbedingungen des Fahrzeugs.

3. Verfahren gemäß Anspruch 2, bei welchem die Versuche die Deaktivierung weiterer Bordlasten (CAN 2) einbezieht.

4. Verfahren gemäß Anspruch 1, bei welchem ein Stichprobenschritt definiert wird durch einen vorbestimmten Weg (N), der vom Fahrzeug zurückgelegt wird.

5. Verfahren gemäß einem der vorhergehenden Ansprüche, bei welchem die Ermittlung und Korrektur (Schritt 2) der Resteenergie (E) einen Schritt der weiteren Korrektur des Restenergiewerts auf Grundlage eines Alterungs-Koeffizienten (KA) der Speicherkapazität der Fahrzeugbatterien auf Grundlage einer Anzahl von Ladungszyklen derselben umfasst.

6. Verfahren gemäß Anspruch 4, bei welchem die Restenergie gleich E = (SOC * (E_N - KA) * K) ist, wobei E_N die Nominalkapazität der Fahrzeugbatterien ist, SOC ein Ladungszustands-Koeffizient ist, KA der vorstehend genannte Alterungs-Koeffizient ist und K der vorstehend genannte Korrekturparameter ist, als Funktion der Restentladungszeit (R) der Batterien des Elektrofahrzeugs.

7. Computerprogramm, umfassend Programmcodemittel, vorgesehen zur Implementierung aller Schritte von einem der Ansprüche 1 bis 6, wenn das Programm auf einem Computer ausgeführt wird.

8. Computerlesbare Mittel, umfassend ein aufgezeichnetes Programm, wobei die computerlesbaren Mittel Programmcodemittel umfassen, vorgesehen zur Implementierung aller Schritte von einem der Ansprüche 1 bis 6, wenn das Programm auf einem Computer ausgeführt wird.

9. Vorrichtung (VMU) zur Schätzung einer Restreichweite eines elektrischen Fahrzeugs, welches Fahrzeug ein Batteriepack und zumindest einen Elektromotor umfasst, der mit einem Fahrzeuggetriebe zusammenwirkt, welche Vorrichtung umfasst:
- Mittel zur Ermittlung eines Ladungszustands (SOC) des Fahrzeugbatteriepacks,
- Mittel zur Ermittlung einer Fahrzeuggeschwindigkeit,
**gekennzeichnet durch**:
- Verarbeitungsmittel, ausgebildet zur Ausführung aller Schritte des Anspruchs 1.

10. Elektrofahrzeug, umfassend ein Batteriepack und zumindest einen Elektromotor, der mit einem Fahrzeuggetriebe zusammenwirkt, und eine Vorrichtung (VMU) zur Schätzung einer Restreichweite des elektrischen Fahrzeugs gemäß Anspruch 9.

## Revendications

1. Méthode d'estimation d'une plage résiduelle d'un véhicule électrique ayant un bloc-batterie et au moins un moteur électrique coopérant avec une transmission de véhicule, la méthode comprenant l'étape de
- (Etape 2') acquisition d'énergie résiduelle E = SOC*E_N, où E_N est la capacité nominale des batteries de véhicule et SOC est un coefficient d'état de charge, la méthode étant **caractérisée par** l'exécution cyclique des étapes suivantes :
- (Etape 5) calcul d'une plage résiduelle (A_R) du véhicule électrique comme le rapport donné par l'énergie résiduelle (E) divisée par un coefficient de consommation kilométrique (DK) prédéterminé et calcul d'un temps de décharge résiduel (R) des batteries de véhicule comme le rapport donné par ladite plage résiduelle (A_R) divisée par une vitesse (S) du véhicule électrique, dans laquelle ledit calcul de ladite plage résiduelle (A_R) et dudit temps de décharge résiduel (R) des batteries de véhicule est effectué sur des valeurs moyennes d'énergie résiduelle (E_E) et de vitesse de véhicule (S_E) d'un nombre prédéterminé d'échantillons (Z)
- (Etape 6) identification d'un paramètre de correction (K) prédéterminé pour ladite valeur d'énergie résiduelle (E), en fonction du temps de décharge résiduel (R) à l'aide d'une fonction prédéterminée dudit temps de décharge résiduel (R),
- (Etape 2) acquisition de ladite énergie résiduelle (E) et correction de celle-ci à l'aide dudit paramètre de correction (K), dans laquelle ladite correction de l'énergie résiduelle (E) est obtenue par l'équation suivante E = SOC*E_N*K, où E_N est la capacité nominale des batteries de véhicule, SOC est le coefficient d'état de charge et K est ledit paramètre de correction prédéterminé.

2. Méthode selon la revendication 1, dans laquelle ledit coefficient de consommation kilométrique exprime une consommation d'énergie par kilomètre calculée et dont une moyenne a été faite lors de tests dans différentes conditions de charge du véhicule.

3. Méthode selon la revendication 2, dans laquelle lesdits tests envisagent la désactivation de toute autre charge embarquée (CAN 2).

4. Méthode selon la revendication 1, dans laquelle une étape d'échantillonnage est définie par une distance (N) prédéterminée parcourue par le véhicule.

5. Méthode selon l'une quelconque des revendications précédentes, dans laquelle lesdites acquisition et correction (Etape 2) de ladite énergie résiduelle (E) comprennent une étape consistant en outre à corriger ladite valeur d'énergie résiduelle sur la base d'un coefficient d'obsolescence (KA) de la capacité de stockage des batteries de véhicule sur la base d'un nombre de cycles de recharge de celles-ci.

6. Méthode selon la revendication 4, dans laquelle ladite énergie résiduelle est égale à E = (SOC*(E_N-KA)*K), où E_N est la capacité nominale des batteries de véhicule, SOC est un coefficient d'état de charge, KA est le coefficient d'obsolescence précité et K est le paramètre de correction précité, fonction du temps de décharge résiduel (R) des batteries du véhicule électrique.

7. Programme informatique qui comprend un moyen de codage de programme conçu pour mettre en oeuvre toutes les étapes selon l'une quelconque des revendications 1 à 6, quand ledit programme est exécuté sur un ordinateur.

8. Moyen lisible sur ordinateur comprenant un programme enregistré, ledit moyen lisible sur ordinateur comprenant un moyen de codage de programme conçu pour mettre en oeuvre toutes les étapes selon l'une quelconque des revendications 1 à 6, quand ledit programme est exécuté sur un ordinateur.

9. Dispositif (VMU) pour estimer une plage résiduelle de véhicule électrique, le véhicule ayant un bloc-batterie et au moins un moteur électrique coopérant avec une transmission de véhicule, le dispositif comprenant
- un moyen pour acquérir un état de charge (SOC) dudit bloc-batterie de véhicule,
- un moyen pour acquérir une vitesse de véhicule, et **caractérisé en ce qu'**il comprend
- un moyen de traitement conçu pour exécuter toutes les étapes de la revendication 1

10. Véhicule électrique comprenant un bloc-batterie et au moins un moteur électrique coopérant avec une transmission de véhicule, et un dispositif (VMU) pour estimer une plage résiduelle de véhicule électrique selon la revendication 9.
